# EUROPEAN PATENT APPLICATION

(11) **EP 4 779 527 A1**
(43) Date of publication of application: **22.07.2026**
(21) Application number: 25152245.4
(22) Date of filing: 16.01.2025
(51) Int. Cl.: G06N 5/022

(54) **DEVICE AND METHOD FOR ENRICHING A KNOWLEDGE GRAPH**

(71) Applicant: Robert Bosch GmbH, 70442 Stuttgart (DE)
(72) Inventor: Monka, Sebastian, 70469 Stuttgart (DE); Tran, Trung Kien, 70569 Stuttgart (DE); Halilaj, Lavdim, 71229 Leonberg (DE)

(57) **Abstract**

According to various embodiments, a method for enriching a knowledge graph (112) is provided, comprising identifying (301) a sub-graph (201) of the knowledge graph (112) comprising nodes connected to a node which misses information, determining (302) sub-graphs in the knowledge graph (112) which are similar to the identified sub-graph (201), extracting (303) examples (205) for the missing information from the found sub-graphs, supplying (304) the extracted examples (205) to a large language model (206) as part of a prompt instructing the large language model (206) to generate the missing information and enriching (305) the knowledge graph (112) with an output generated by the large language model (206) in response to the prompt.

## Description

The present disclosure relates to devices and methods for enriching a knowledge graph, in particular a knowledge graph for robot device control.

Knowledge graphs have become a useful component in the operation and control of technical systems, such as robotic devices. These graphs enable the integration and organization of vast amounts of data, providing a structured framework that enhances decision-making processes and system efficiency. However, when knowledge graphs are constructed from heterogeneous sources, they often suffer from incomplete or missing information. This limitation can significantly impact the performance and reliability of the control that relies on them. Therefore, there is a need for efficient methods to enrich knowledge graphs, ensuring they are complete and accurate and thus enabling reliable control of robot devices.

According to various embodiments, a method for enriching a knowledge graph is provided, comprising
- Identifying a sub-graph of the knowledge graph comprising nodes connected to a node which misses information;
- Determining sub-graphs in the knowledge graph which are similar to the identified sub-graph;
- Extracting examples for the missing information from the found sub-graphs;
- Supplying the extracted examples to a large language model as part of a prompt instructing the large language model to generate the missing information; and
- Enriching the knowledge graph with an output generated by the large language model in response to the prompt.

The method described above allows overcoming incompleteness of a knowledge graph (KG) and for example helps to ensure the correctness of (automatically) constructed large scale KGs.

According to various embodiments, an LLM-based Semantic Interoperability Conflict Solver (SIC Solver) is provided which leverages internal information content (i.e. natural language descriptions) of a knowledge graph (KG) to predict missing and wrongly assigned attributes or types of entities. The LLM is thus used to enrich an KG using already present information in the KG, such as automatically gathered descriptions instead of using only the internal knowledge of the LLM.

In the context of controlling and operating a technical system, such as robotic control, missing information of the knowledge graph may be understood as gaps or incomplete data within the knowledge graph that can hinder the respective controller's ability to make informed decisions or perform tasks accurately. This may refer to that nodes of the knowledge graph miss information (e.g. attributes) or that edges are missing in the knowledge graph. For example, an edge which represents the information that a certain object belongs to a certain class of objects, for which instructions or parameters are defined, is missing. The object can then possibly not be handled correctly.

For example,
- if the knowledge graph does not include the full sequence of steps required to complete a certain task, the robot device might not be able to execute the task from start to finish.
- if a the knowledge graph lacks detailed information about certain objects it needs to interact with (e.g., object class, dimensions, weight, material), it may struggle to handle those objects correctly.
- similarly, the knowledge graph may miss parameter values specifying how specific steps should be taken out, e.g. in a specific context, such as under specific environmental conditions

In the following, various examples are given.

Example 1 is a method for enriching a knowledge graph as described above.

Example 2 is the method of example 1, comprising determining the sub-graphs similar to the identified sub-graph by generating an embedding of the identified sub-graph in an embedding space and generating embeddings of other sub-graphs of the knowledge graph in the embedding space and determining those of the other sub-graphs which have an embedding which is close to the embedding of the identified sub-graph in the embedding space (according to some distance measure, e.g. metric, in the embedding space, such as cosine similarity; for example, "close" may refer to that metric being below a predefined threshold).

This allows efficiently finding relevant examples from the knowledge graph.

Example 3 is the method of example 2, wherein the embeddings include text embeddings of one or more nodes of the identified sub-graph and the other sub-graphs, respectively.

For textual embedding, efficient models are available which allow the determination of meaningful embeddings allowing efficiently searching of similarities between textual content.

Example 4 is the method of example 3, wherein the one or more nodes are one or more nodes of the identified sub-graph and the other sub-graphs, respectively, identified by user input.

In this manner, expert knowledge can be considered in the enrichment of the knowledge graph. For example, a user may specify that the process name should be considered when finding examples for a process type.

Example 5 is the method of example 3 or 4, wherein at least some of the one or more nodes include unstructured information of the knowledge graph.

By considering unstructured information when finding examples for missing information, which is for example structured information, a knowledge graph may by enriched with structured information based on unstructured information, which is useful if it has been generated from heterogeneous data sources which typically give rise to unstructured information.

Unstructured Information may be understood as data that does not follow a predefined data model or is not organized in a structured manner. For example, data may come from various sources and may therefore not follow a single data model (or format). This diversity makes it challenging to process and integrate. This in particular includes natural language instructions or information, which is possibly in different languages or formats (e.g., emails, PDFs, handwritten notes).

Example 6 is the method of any one of examples 2 to 5, wherein the embeddings include knowledge graph embeddings of the identified sub-graph and the other sub-graphs, respectively.

As for textual embedding, efficient models are available for knowledge graph embeddings. In contrast to (purely) textual embeddings, the knowledge graph embeddings allow finding similarities based on structural similarities of entities (i.e. similarities in the structure of how other entities (i.e. nodes representing them in the knowledge graph) are connected).

Example 7 is the method of any one of examples 1 to 6, further comprising supplying information contained by nodes of the identified sub-graph to the large language model as part of the prompt.

This provides context information to the large language model. For example, it may use a process name, process description, process parameters or process type description to predict a process type. In this manner prior knowledge of the LLM can be effectively used for the prediction.

Example 8 is a method for controlling a robot device, comprising enriching a knowledge graph for robot device control according to the method of any one of examples 1 to 7 and controlling the robot device in accordance with the enriched knowledge graph.

Example 9 is a data processing system (in particular for example including a robot device controller), configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a robot.
Figure 2 illustrates the enriching of a knowledge graph using an LLM according to an embodiment.
Figure 3 shows a flow diagram illustrating a method for enriching a knowledge graph.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

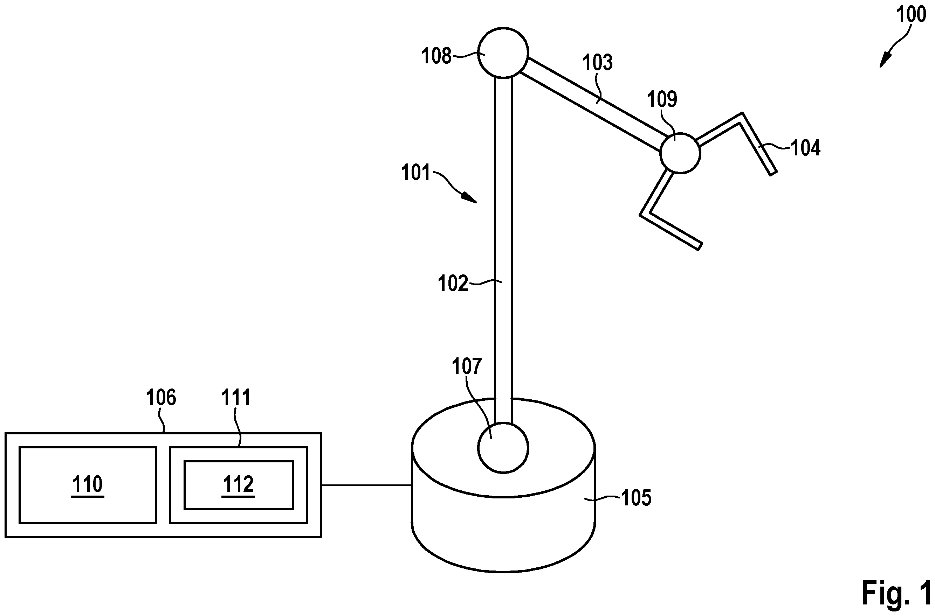

Figure 1 shows a robot 100.

The robot 100 includes a robot arm 101, for example an industrial robot arm for handling or assembling a work piece (or one or more other objects). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and may include one or more tools such as a welding torch, a soldering tool, gripping instrument, painting or glueing equipment, or the like.

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm (possibly with a tool at its end).

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data according to which the processor 110 controls the robot arm 101. According to various embodiments, the controller 106 controls the robot arm 101 on the basis of a knowledge graph 112 stored in the memory 111.

A knowledge graph has nodes and edges connecting the nodes and thus indicating relations between the nodes. A simple example for a knowledge graph (KG) in robot control in a textual representation (where [.] indicate nodes and lines drawn using |, + and - represent edges) is as follows.

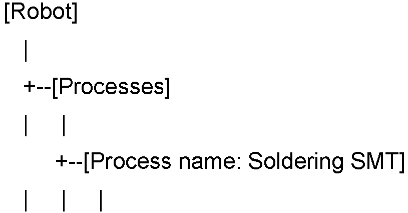

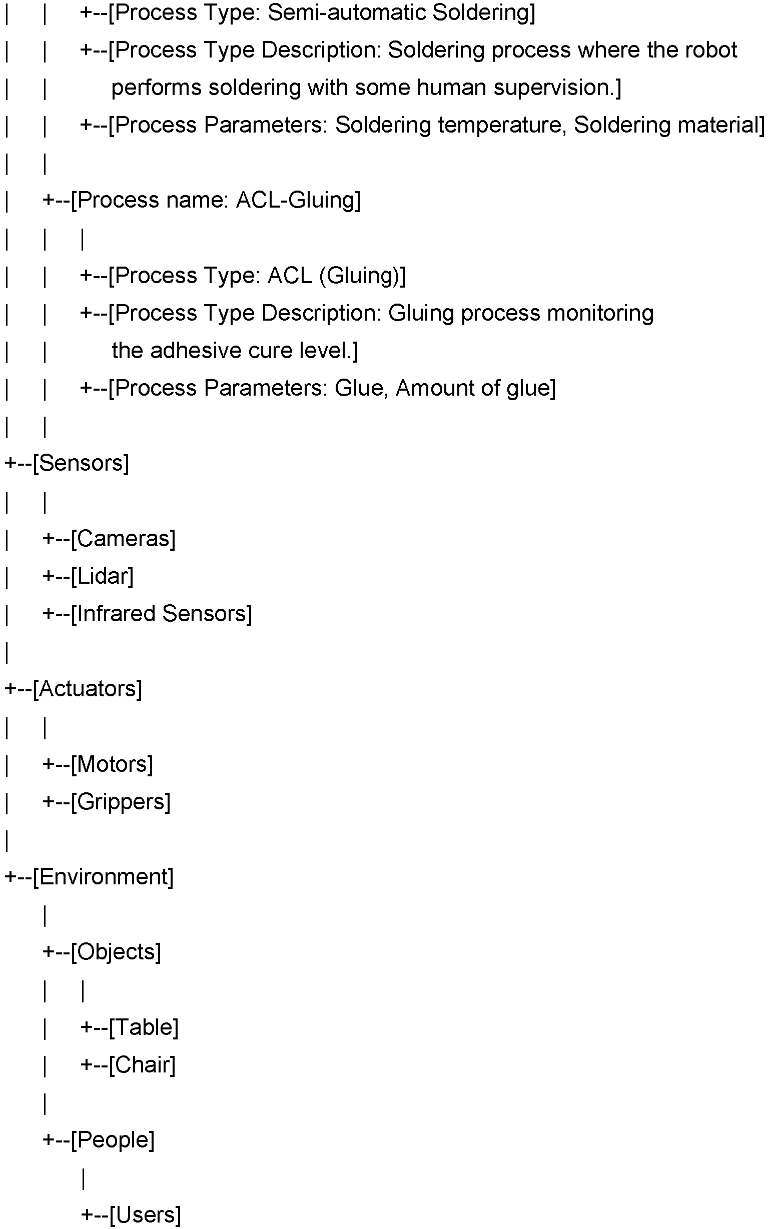

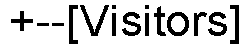

Using such a knowledge graph 112, the controller 106 may for example control the robot arm 101 to perform a soldering process.
1. Initialization: The controller 106 identifies the soldering SMT (surface mounted device) process from the knowledge graph as a process belonging to the process type soldering.
2. Configuration: The controller 106 retrieves the process parameters (Soldering temperature, Soldering material) from the knowledge graph connected to the identified process node.
3. Execute: the controller 106 controls the robot arm 101 to perform the soldering according to the process parameters. For example, the knowledge graph may include instructions how this should be done, e.g. in one or more further nodes connected to the identified process node.

Data mapping from many heterogeneous sources is difficult and labour extensive. Accordingly, a knowledge graph 112 which is built using heterogeneous data sources (e.g. expert knowledge, i.e. user input, sub-graphs describing different processes, robot specifications etc.) may contain semantic interoperability conflicts (SICs) due to the presence of diverse natural language descriptions or wrongly assigned attributes for the same entities.

With the presence of these issues in the KG, a controller (or another "user" which may also be a human user) is not able to efficiently query and consume the information stored in KG due to heterogeneity (e.g. the same entity (e.g. the same process) has different names) and missing links (i.e. edges).

For example, data links in a knowledge graph (e.g. LIS (Line Information System)-KG) can be missing or incomplete due to a lack of common key between agnostic source systems (such as MES (Manufacturing Execution System), ERP (Enterprise Resource Planning) and MD (Master Data)). For example, vendors of similar machines have different naming conventions leading to that the same entity having different names in the KG. Further, even if data is mapped correctly, complex user questions can possibly not be solved by conventional methods (SPARQL (SPARQL Protocol and RDF Query Language), GraphQL (Graph Query Language), User Interface) due to different levels of abstraction.

An approach to address missing information is prediction of the missing information.

For example, suppose there is an edge between a process node and a process type node
Process -- ? Process Type
wherein the question mark indicates that the process type node lacks the process type (i.e. the entry in the process type node is missing such that it does not indicate the correct process type).

Predicting a fact (i.e. data in a node such as the process type in the example above) may not be possible using traditional link prediction methods since information about related links, i.e. further edges to other nodes that hold information helping to determine the process type may also be missing. This case is quite typical since most KGs are sparse.

According to various embodiments, an approach to fill in missing information into a knowledge graph (i.e. enrich the knowledge graph with missing information) is provided that uses an LLM (large language model) to find the information to be inserted. Missing information is included in a "structured" manner such that it can then be easily queried and used, e.g. it can be achieved that information that is inserted matches other information in the knowledge graph having the same meaning (e.g. a process type that is inserted has the same designation as another one if it is the same process type). Thus, a tool (which may be seen as a SIC Solver - i.e. an LLM-based SIC solver) for KG completion can be provided. This tool may for example be executed by a controller or by another data processing device from which the KG is then stored in the controller for controlling a technical system, e.g. a robot as it is the case for the controller 106 of the example of figure 1.

Suppose a sequence of connected nodes
Process -- Process Name ("Soldering SMT") - ?Process Type -- Process Type Description
as in the above KG example.

Using an LLM, it is possible to leverage the natural language information such as the Process Name or the Process Type description to predict the missing Process Type.

It should be noted that in contrast to using an LLM to predict links in a KG based on internal knowledge of the LLM, the approach used according to various embodiments uses an LLM to convert the internal knowledge of the KG to predict missing information (and/or links). This helps especially for domain-specific KGs, because for domain-specific KGs, it is not possible to rely on the internal knowledge of the LLM (and also due to the risk of hallucination). Further, standard link prediction methods fail if there is no structured information that can be leveraged for this task. Moreover, encoding structured information into LLMs as natural language is quite error prone.

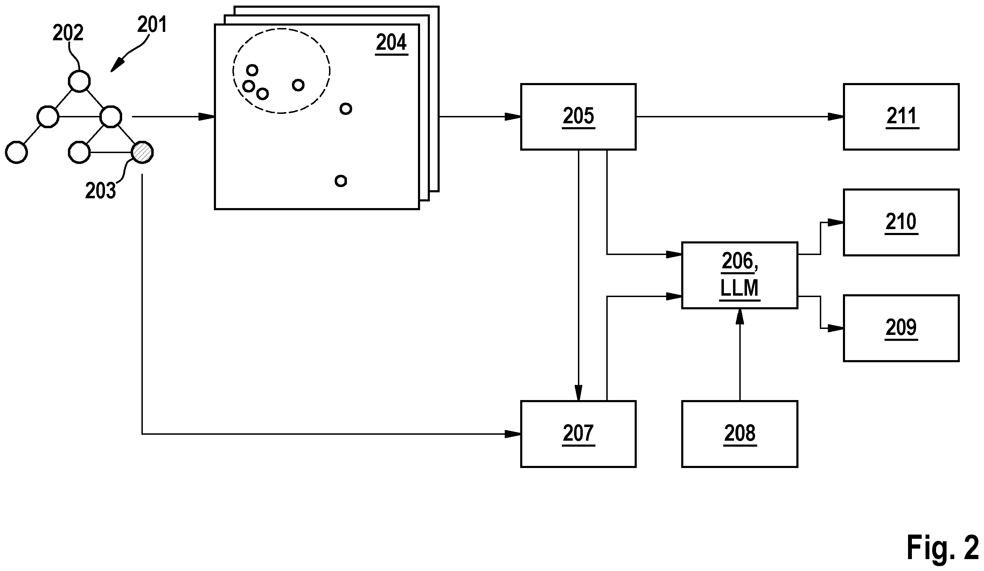

Figure 2 illustrates the enriching of a knowledge graph using an LLM according to an embodiment.

The LLM is used to predict missing information in the KG by leveraging natural language descriptions present in the knowledge graph. It should be noted that this approach may also be used to correct wrong information in a KG, e.g. simply by treating wrong information as missing information.

Assume as an example that the right process type (ACL glueing) is not assigned to the process type node connected to a process node and the process can therefore not be found when querying the KG using the process type. In that case, the KG cannot be used correctly for a gluing task (e.g. since a gluing process is not found or not all gluing processes are found when using the process type as key).

Accordingly, the goal of the LLM-based SIC solver is to automatically predict the right fact ("ACL gluing" in the present example) for a node using unstructured data (such as process name or process description) in the KG and prior knowledge (e.g. if a process is part of a glueing process; this includes in particular prior knowledge that the LLM has).

For example, the goal is to predict the process type for a process (also referred to as "present process" in the following), using the process name and the process type description that is present in nodes connected to the process type node (whose content should be predicted).

Accordingly, the SIC solver gets the following information:
- KG information, i.e. KG node entry to predict, in this example the process class, i.e. the entry of a process class node 203
- Superordinate entity of the KG node whose entry should be predicted; in this example, this is the process to which the process type node 203 is connected (the SIC solver can determine this superordinate entity automatically by determining the respective entity node in the KG node, in the present example the process node 202; as illustrated in figure 2, the process node 202 is the root node of a sub-graph 201 of the KG which includes the nodes of the KG holding information about the process)
- support parameters (i.e. structured data held by other nodes of the sub-graph 201; the data of those nodes is used to predict the KG node entry), in the present example process name and process parameter names
- support data (i.e. unstructured data that describes the KG node entry, in the present example the process type description held by a process type description node of the sub-graph 201)

Unstructured data can be understood to lake a predefined format and a predefined set of possible values from which it is taken, unlike the structured data. The task of the SIC solver can therefore also be seen to generate structured data (the process type which is e.g. from a set of predefined process types and/or has a predefined structure) from unstructured data (a textual description of the process type).

The SIC solver determines relevant examples for the KG information to be predicted from an example space 204. The example space 204 includes support information for the prediction: it contains all already assigned facts regarding the specific problem, i.e. superordinate entities for the KG node whose information should be predicted (in the present case processes) for which the KG contains support parameters (in the present case contains process names and process parameters names) and for which the KG contains an entry for the node whose entry should be predicted (in this case a process type)

The SIC solver uses the example space 204 to look into the data for similar entities (i.e. processes in the present case) and uses textual descriptions or structural properties of the KG with respect to these similar entities to understand the relationship between the support parameters and the entry to be predicted.

In the present example, the SIC solver uses similar processes to understand the relationship between process parameters, process name and process type to, in this manner, gain information about the process type to be predicted (for which process name and process parameters are known from the connected nodes in the sub-graph 201).

To determine which examples from the KG are similar to the present entity (i.e. the present process in the present example) the SIC solver determines embeddings of the present entity and the example entities. This may be done based on
- language embeddings, e.g. the SIC solver uses a trained text embedding model to determine, for each entity, an embedding by embedding text of the entity, for example process name and process parameter names, possibly also process type description (i.e. possibly unstructured data in addition to structured data) and/or
- KG embeddings, i.e. the SIC solver uses a trained KG embedding model to determine, for each entity, an embedding of the sub-graph corresponding to the entity (i.e. in the present example the process nodes and subordinate nodes, i.e. for example of the sub-graph 201 and of other sub-graphs corresponding to processes in the KG.

By defining a metric between embeddings of the solution space 204 (e.g. Euclidean metric between embeddings which are in form of vectors, i.e. the solution space is e.g. a vector space with a metric which can be used to find (i.e. determine) similar sub-graphs) the SIC solver determines the most similar (i.e. closest, in the sense of the metric) entities of the present entity.

In other words, the SIC solver embeds the entity for which information is to be predicted via its support parameters and/or sub-graph structure and does a similarity search.

The SIC solver then uses the n (e.g., 5) most similar examples.

The SIC solver can also determine different embeddings for different support parameters (e.g., for each related entity (e.g. each process and the present process) one embedding for process name and one embedding for process parameters) and/or possible also a structure embedding (i.e. a KG embedding of the respective sub-graph) to determine examples arising from similarities to other entities regarding different aspect (i.e. from process name similarities, process parameters similarities and structural similarities). In any case, the result is a set of relevant examples 205 for the entry to be predicted. This includes in particular example solutions, i.e. entries for the node (e.g. process type node) whose content should be predicted for the present entity (i.e. the present process).

The SIC solver feeds the relevant examples 205 to an LLM 206.

Further, the SIC solver feeds a solution context information 207, 208 to the LLM 206. The solution context can include internal context information or external context information
- Internal context information 207 is information of the KG regarding the entry to be predicted of the relevant examples (e.g. process type description information of the present process as well as of the relevant examples 205).
- External context information 208 is information from an external source (i.e. user input). This may for example be information regarding the process types of the relevant examples (e.g. process type descriptions or a reasoning about a process type of a certain process) or explanation about terms like ACL (Adhesive Cure Level), CCS (Cold Cure System) or COM (Component Object Model) used in the process types of the relevant examples 205.

The SIC solver prompts the LLM 206 to combine the information it gets as input (i.e. information from the n selected examples 205 and the context information 207, 208) to predict the missing entry (process type in the present example).

The prompt is for example as follows:
"Your task is to predict the correct solution for a given entity using the given support parameters.
Therefore, you have a list of entities with similar support parameters and known solutions.
Predict from the similarity of the support parameters the missing solution for the given entity.
The entity with support parameters but without solution:
   {Entity to predict}
Similar entities, their support parameters, their solutions, and their similarity score to the entity to predict:
   {Relevant Examples}
Context of the possible solutions:
   {Solution Context}"

The output of the LLM 206 is a prediction 209 and an explanation 210. These may for example be verified by a user before enriching the KG with the prediction and using the enriched KG for control. Further, information about the relevant examples 205 (e.g. their level of similarity to the entity for which an entry should be predicted) may be output as grounding support 211 by the user before enriching the KG with the prediction.

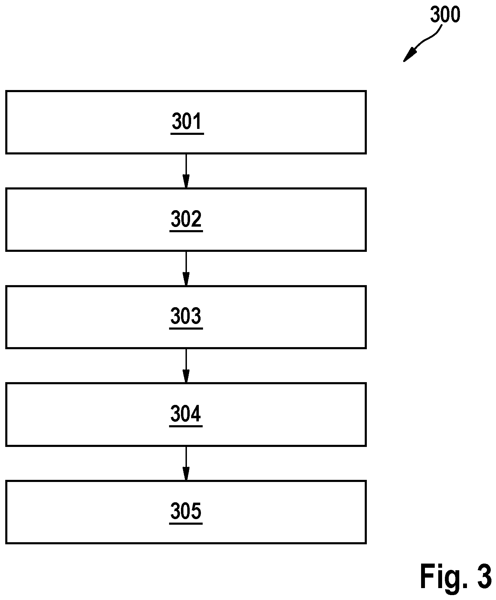

In summary, according to various embodiments, a method is provided as illustrated in figure 3.

Figure 3 shows a flow diagram 300 illustrating a method for enriching a knowledge graph.

In 301, a sub-graph of the knowledge graph comprising nodes connected to a node which misses information (or, equivalently, has wrong information, i.e. misses correct information) is identified.

In 302, sub-graphs in the knowledge graph which are similar (according to a similarity criterion, e.g. with respect to structure and/or data, e.g. textual, content) to the identified sub-graph are found (i.e. determined).

In 303, examples for the missing information are extracted from the found sub-graphs (i.e. the similar sub-graphs).

In 304, the extracted examples are supplied to a large language model as part of a prompt instructing the large language model to generate the missing information.

In 305, the knowledge graph is enriched with an output generated by the large language model in response to the prompt (i.e. the output is assigned to the node which misses information).

The missing information is for example information for controlling a robot device (i.e. including information on how to control the robot device or information on how to find information on how to control the robot device in the KG, such as a process type as in the examples above). Each sub-graph may for example correspond to a control process (e.g. a robotic skill).

It should be noted that the prompt does not necessarily be supplied with a single input. The LLM may also be prompted in a sequence of inputs to generate the missing information. For example, an input including the instruction may refer to examples previously input to the LLM. Nevertheless, the examples are supplied in this manner as part of the input (by means of reference).

The method of Figure 3 and its embodiments and examples may be performed by a data processing system comprising one or more data processing devices (e.g. computers or controllers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for enriching a knowledge graph (112), comprising:
Identifying (301) a sub-graph (201) of the knowledge graph (112) comprising nodes connected to a node which misses information;
Determining (302) sub-graphs in the knowledge graph (112) which are similar to the identified sub-graph (201);
Extracting (303) examples (205) for the missing information from the found sub-graphs;
Supplying (304) the extracted examples (205) to a large language model (206) as part of a prompt instructing the large language model (206) to generate the missing information; and
Enriching (305) the knowledge graph (112) with an output generated by the large language model (206) in response to the prompt.

2. The method of claim 1, comprising determining the sub-graphs similar to the identified sub-graph (201) by generating an embedding of the identified sub-graph (201) in an embedding space and generating embeddings of other sub-graphs of the knowledge graph (112) in the embedding space and determining those of the other sub-graphs which have an embedding which is close to the embedding of the identified sub-graph (201) in the embedding space.

3. The method of claim 2, wherein the embeddings include text embeddings of one or more nodes of the identified sub-graph (201) and the other sub-graphs, respectively.

4. The method of claim 3, wherein the one or more nodes are one or more nodes of the identified sub-graph (201) and the other sub-graphs, respectively, identified by user input.

5. The method of claim 3 or 4, wherein at least some of the one or more nodes include unstructured information of the knowledge graph (112).

6. The method of any one of claims 2 to 5, wherein the embeddings include knowledge graph (112) embeddings of the identified sub-graph (201) and the other sub-graphs, respectively.

7. The method of any one of claims 1 to 6, further comprising supplying information (207) contained by nodes of the identified sub-graph (201) to the large language model (206) as part of the prompt.

8. A method for controlling a robot device, comprising:
Enriching a knowledge graph (112) for robot device control according to the method of any one of claims 1 to 7; and
Controlling the robot device in accordance with the enriched knowledge graph (112).

9. A data processing system, configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.
